# EUROPÄISCHE PATENTSCHRIFT

(11) **EP 2 806 107 B1**
(45) Veröffentlichungstag und Bekanntmachung des Hinweises auf die Patenterteilung: **09.08.2017**
(21) Anmeldenummer: 13168669.3
(22) Anmeldetag: 22.05.2013
(51) Int. Cl.: F01D 9/04, F01D 17/16

(54) **Geteilter Innenring**
Split inner ring
Bague intérieure séparée

(43) Veröffentlichungstag der Anmeldung: 26.11.2014
(73) Patentinhaber: MTU Aero Engines AG, 80995 München (DE)
(72) Erfinder: Zotz, Georg, 85778 Haimhausen (DE)

(56) Entgegenhaltungen:
- EP-A1- 0 259 221
- DE-A1-102008 032 661
- US-A- 5 062 767

## Beschreibung

Die vorliegende Erfindung betrifft einen geteilten Innenring für eine verstellbare Leitschaufelanordnung einer Turbomaschine, eine Turbomaschine, insbesondere eine Gasturbine, vorzugsweise ein Flugtriebwerk, mit einem verstellbaren Leitgitter mit einem solchen Innenring sowie ein Verfahren zur Montage eines solchen Innenrings. Nach der eigenen DE 10 2006 024 085 A1 sind Turbomaschinen mit verstellbaren Leitgittern bekannt, deren verstellbare Leitschaufeln in einem Innenring gelagert sind, welcher quer- und/oder längsgeteilt sein kann. Die Ringsegmente des geteilten Innenrings werden miteinander verschraubt oder elastisch verspannt. Anschließend werden Buchsen von radial innen in den Innenring eingeführt, um die Leitschaufeln zu lagern. In der Patentschrift EP 0259221 sind die zwei Ringsegmente durch eine ringförmige Schiene miteinander verbunden. Eine Aufgabe einer Ausführung der vorliegenden Erfindung ist es, eine Turbomaschine mit einem geteilten Innenring zur Verfügung zu stellen.

Diese Aufgabe wird durch einen geteilten Innenring mit den Merkmalen des Anspruchs 1 gelöst. Anspruch 14 stellt eine Turbomaschine mit einem solchen Innenring, Anspruch 15 ein Verfahren zur Montage eines solchen Innenrings unter Schutz. Vorteilhafte Ausführungsformen der Erfindung sind Gegenstand der Unteransprüche. Ein Innenring für eine verstellbare Leitschaufelanordnung einer Turbomaschine nach einem Aspekt der vorliegenden Erfindung weist eine Ringsegmentanordnung mit zwei oder mehr Ringsegmenten auf.

Die Ringsegmentanordnung kann quer- bzw. senkrecht zu einer Drehachse der Turbomaschine in Ringsegmente geteilt sein und zwei oder mehr axial benachbarte, Ringsegmente aufweisen, die miteinander eine Trennfuge in Umfangsrichtung definieren und einander im montierten Zustand mit einander zugewandten axialen Stirnflächen kontaktieren. Zusätzlich oder alternativ kann die Ringsegmentanordnung längs- bzw. parallel zu einer Drehachse der Turbomaschine in Ringsegmente geteilt sein und zwei oder mehr in Umfangsrichtung benachbarte Ringsegmente aufweisen, die miteinander eine axiale Trennfuge definieren und einander im montierten Zustand mit einander zugewandten Umfangsstirnflächen kontaktieren. In einer Ausführung besteht die Ringsegmentanordnung aus zwei axial benachbarten Ringsegmenten, die sich jeweils ringartig über 360° in Umfangsrichtung erstrecken. In einer anderen Ausführung besteht die Ringsegmentanordnung aus zwei in Umfangsrichtung benachbarten Ringsegmenten, die sich vorzugsweise jeweils über 180° erstrecken. In einer anderen Ausführung besteht die Ringsegmentanordnung aus vier Ringsegmenten, die sich vorzugsweise jeweils über 180° erstrecken, wobei je zwei Ringsegmente in Umfangsrichtung benachbart sind und eine axial vordere bzw. hintere Ringhälfte bilden, und wobei diese beiden Ringhälften axial benachbart sind. Gleichermaßen kann der Innenring in axialer Richtung in drei oder mehr Scheiben geteilt sein. Zusätzlich oder alternativ können eine oder beide Ringhälften bzw. eine oder mehrere Ringscheiben aus mehr als zwei paarweise in Umfangsrichtung benachbarten Ringsegmenten bestehen.

Der Innenring weist nach einem Aspekt der vorliegenden Erfindung eine verstellbare Leitschaufelanordnung mit einer oder mehreren Leitschaufeln auf, die in Umfangsrichtung voneinander beabstandet durch Buchsen einer Buchsenanordnung verstellbar, insbesondere verdrehbar gelagert sind. In einer Ausführung weisen die Leitschaufeln jeweils einen radial inneren Zapfen auf, der in eine Durchgangs- oder Sackbohrung einer Buchse der Buchsenanordnung eingreift und in dieser drehbar gelagert ist. Die Buchsen der Buchsenanordnung können ein- oder mehrteilig sein.

Nach einem Aspekt der vorliegenden Erfindung sind wenigstens zwei, vorzugsweise alle Ringsegmente der Ringsegmentanordnung durch die Buchsenanordnung miteinander verbindbar bzw. verbunden. Somit vereint die Buchsenanordnung integral zwei Funktionen, nämlich die Lagerung der Leitschaufelanordnung und die Verbindung der Ringsegmentanordnung. Hierdurch kann in einer Ausführung der Montageaufwand reduziert werden. Zusätzlich oder alternativ kann der Bauraum optimiert werden, da zusätzliche Verbindungsmittel wie Schrauben oder dergleichen reduziert werden und vorzugsweise entfallen können. Zusätzlich oder alternativ kann eine Leckage durch eine oder mehrere Trennfugen der Ringsegmentanordnung reduziert werden.

Zwei oder mehr jeweils benachbarte Ringsegmente der Ringsegmentanordnung können in einer Ausführung der vorliegenden Erfindung durch die Buchsenanordnung mit- bzw. aneinander verriegelt werden bzw. sein. Hierunter wird vorliegend insbesondere die Begrenzung, vorzugsweise Fixierung, in einer oder zwei gegensinnigen Richtungen eines oder mehrerer Freiheitsgrade verstanden, insbesondere eine Begrenzung einer Bewegung benachbarter Ringsegmente voneinander fort und/oder aufeinander zu in axialer und/oder Umfangsrichtung. In einer Weiterbildung können zwei oder mehr jeweils benachbarte Ringsegmente der Ringsegmentanordnung durch die Buchsenanordnung miteinander verspannt werden bzw. sein. Hierunter wird vorliegend insbesondere eine, vorzugsweise elastische, Vorspannung in einem oder mehreren Freiheitsgraden verstanden, insbesondere eine Vorspannung benachbarter Ringsegmente aufeinander zu in axialer und/oder Umfangsrichtung. Verriegeln und Verspannen werden vorliegend zur kompakteren Darstellung verallgemeinernd als Verbinden bezeichnet.

In einer Ausführung können zwei oder mehr jeweils benachbarte Ringsegmente der Ringsegmentanordnung durch die Buchsenanordnung formschlüssig miteinander verbunden werden bzw. sein. Zusätzlich oder alternativ können zwei oder mehr jeweils benachbarte Ringsegmente der Ringsegmentanordnung durch die Buchsenanordnung reib- oder stoffschlüssig miteinander verbunden werden bzw. sein. Hierzu können eine oder mehrere Buchsen der Buchsenanordnung mit einem oder beiden benachbarten Ringsegmenten jeweils form-, reib- und/oder stoffschlüssig verbunden werden bzw. sein.

Insbesondere können eine oder mehrere Buchsen der Buchsenanordnung jeweils einen radialen Vorsprung aufweisen, der eine Hinterschneidung in zwei benachbarten Ringsegmenten der Ringsegmentanordnung, vorzugsweise form-, reib- und/oder stoffschlüssig, hintergreift. In einer Weiterbildung können eine oder mehrere Buchsen der Buchsenanordnung jeweils einen Bund aufweisen, der einen, vorzugsweise umlaufenden, Kragen aufweist, welcher im montierten Zustand als radialer Vorsprung in eine entsprechende Hinterschneidung in den Ringsegmenten eingreift, die in einer Ausführung durch eine, vorzugsweise umlaufende bzw. durchgehende, Nut in den benachbarten Ringsegmenten ausgebildet sein kann. In einer Ausführung sind die Buchsen und/oder die Hinterschneidung rotationssymmetrisch ausgebildet. Insbesondere kann eine Buchse in einem Axialschnitt einen L-förmigen Querschnitt aufweisen, wobei der lange Schenkel in eine entsprechende Bohrung in den benachbarten Ringsegmenten einführbar bzw. eingeführt sein kann, der kurze Schenkel den radialen Vorsprung bilden kann, und der Bund beide Schenkel miteinander verbindet. Die Hinterschneidung kann insbesondere durch eine Ringnut ausgebildet sein, die durch die benachbarten Ringsegmenthälften gemeinsam gebildet wird.

Die Hinterschneidung ist in einer Ausführung auf einer der Leitschaufelanordnung abgewandten Seite der Ringsegmentanordnung angeordnet, so dass in einer Ausführung die Buchsen von radial innen in die Ringsegmentanordnung eingeführt werden können und dabei die radialen Vorsprünge die Hinterschneidungen hintergreifen. Gleichermaßen können die Hinterschneidungen auf einer der Leitschaufelanordnung zugewandten Seite der Ringsegmentanordnung angeordnet sein, so dass in einer Ausführung die Buchsen von radial außen in die Ringsegmentanordnung eingeführt werden können und dabei die radialen Vorsprünge die Hinterschneidungen hintergreifen, bevor anschließend die Leitschaufeln in den Buchsen gelagert werden.

In einer Ausführung ist ein ein- oder mehrteiliges, insbesondere ein- oder mehrfach quer- und/oder längsgeteiltes, Sicherungselement zur radialen Festlegung der Buchsenanordnung an der Ringsegmentanordnung vorgesehen. Dieses kann mit der Ringsegmentanordnung form-, reib- und/oder stoffschlüssig verbunden werden bzw. sein. Insbesondere kann es wenigstens einen axialen Vorsprung aufweisen, der eine Hinterschneidung in der Ringsegmentanordnung hintergreift. In einer Weiterbildung weist es wenigstens zwei einander zugewandte axiale Vorsprünge auf, die zwei zwischen den Vorsprüngen angeordnete Hinterschneidungen in der Ringsegmentanordnung hintergreifen. Diese Hinterschneidung bzw. Hinterschneidungen können in einer Ausführung durch Umfangsnuten in der Ringsegmentanordnung ausgebildet sein, in die die axialen Vorsprüngen form-, reib- und/oder stoffschlüssig eingreifen.

Das Sicherungselement kann in einer Weiterbildung als Dichtungsträger ausgebildet sein bzw. eine Innendichtung, vorzugsweise eine ein- oder mehrteilige Waben- und/oder Bürstendichtung aufweisen. Hierdurch können vorteilhaft zwei Funktionen, nämlich die radiale Sicherung der Buchsenanordnung und die Positionierung der Innendichtung, in einem Bauteil integriert werden.

Zwei oder mehr axial benachbarte Ringsegmente einer quergeteilten Ringsegmentanordnung können in einer Ausführung formschlüssig aneinander zentriert werden bzw. sein. Hierzu kann ein Ringsegment in einer Ausführung einen oder mehrere axiale Vorsprünge aufweisen, der bzw. die in entsprechende Aussparungen in der axialen Stirnseite des benachbarten Ringsegments eingreifen. Zusätzlich oder alternativ kann das Sicherungselement axial benachbarte Ringsegmente der quergeteilte Ringsegmentanordnung formschlüssig zentrieren. Hierzu kann in einer Ausführung das Sicherungselement einen oder mehrere axiale Vorsprünge aufweisen, der bzw. die in entsprechende Aussparungen in wenigstens einem der Ringsegmente eingreifen. Zusätzlich oder alternativ kann das Sicherungselement einen oder mehrere Aussparungen aufweisen, in die axiale Vorsprünge an wenigstens einem der Ringsegmente eingreifen.

In einer Ausführung ist eine Turbomaschine mit einem oder mehreren verstellbaren Leitgittern mit einem vorstehend erläuterten geteilten Innenring eine Gasturbine, insbesondere ein Flugtriebwerk, wobei ein solches Leitgitter insbesondere in einer oder mehreren Verdichter- und/oder Turbinenstufen angeordnet sein kann.

Zur Montage eines vorstehend erläuterten geteilten Innenrings werden zwei oder mehr Ringsegmente der Ringsegmentanordnung axial und/oder in Umfangsrichtung benachbart zueinander angeordnet und durch die Buchsenanordnung verbunden. Insbesondere dabei oder anschließend wird die Leitschaufelanordnung in der Buchsenanordnung gelagert.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1:: einen Axialschnitt eines Teils eines Innenrings einer Turbomaschine nach einer Ausführung der vorliegenden Erfindung; und
- Fig. 2:: eine Ansicht von radial innen gemäß A-A in Fig. 1 ohne einen Dichtungsträger.

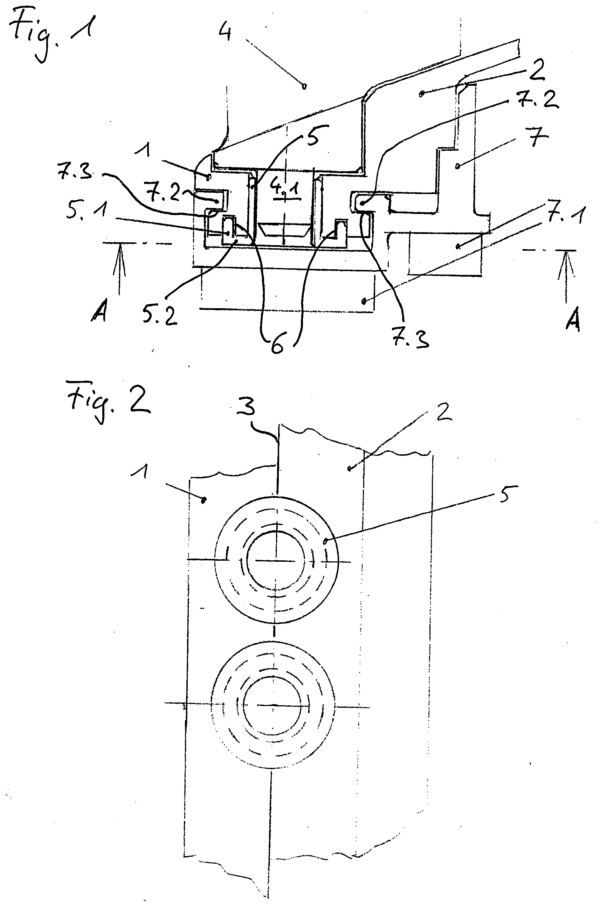

Fig. 1 zeigt einen Axialschnitt eines Teils eines Innenrings einer Turbomaschine nach einer Ausführung der vorliegenden Erfindung mit einer quergeteilten Ringsegmentanordnung mit einem axial vorderen Ringsegment (links in Fig. 1) und einem diesem axial benachbarten hinteren Ringsegment (rechts in Fig. 2), die miteinander eine Trennfuge 3 (vgl. Fig. 2) in Umfangsrichtung (vertikal in Fig. 2) definieren.

Verstellbare Leitschaufeln 4 einer Leitschaufelanordnung sind mittels Zapfen 4.1 drehbar in Durchgangsbohrungen von Buchsen 5 einer Buchsenanordnung des Innenrings gelagert.

Die axial benachbarten Ringsegmente 1, 2 sind durch die Buchsen 5 der Buchsenanordnung formschlüssig miteinander verbunden. Hierzu weisen die Buchsen 5 jeweils einen radialen Vorsprung in Form eines Kragens 5.1 an einem Bund 5.2 auf, der eine Hinterschneidung in den Ringsegmenten 1, 2 hintergreift, die durch eine Ringnut 6 definiert ist. Der Bund 5.2 kann im montierten Zustand elastisch aufgeweitet sein, um die Buchse 5 reibschlüssig an den Ringsegmenten festzulegen und diese zu verspannen.

Die Hinterschneidungen 6 sind auf einer der Leitschaufelanordnung abgewandten Seite der Ringsegmentanordnung (unten in Fig. 1) angeordnet, um eine Montage von radial innen mit gleichzeitiger oder anschließender Lagerung der Leitschaufeln 4 zu ermöglichen.

Ein mehrteiliges Sicherungselement in Form eines quergeteilten Dichtungsträgers 7 mit einer Innendichtung 7.1 ist mit den Ringsegmenten 1, 2 formschlüssig verbunden. Hierzu greifen zwei einander gegenüberliegende axiale Vorsprünge 7.2 des Dichtungsträgers in entsprechende Umfangsnuten in den Ringsegmenten 1, 2, die Hinterschneidungen 7.3 definieren, und legen so auch die Buchsenanordnung an der Ringsegmentanordnung radial fest. Der Dichtungsträger 7 kann im montierten Zustand elastisch radial aufgeweitet sein, um die Buchsen 5 radial gegen die Ringsegmente vorzuspannen.

Der Dichtungsträger 7 zentriert die Ringsegmente 1, 2 formschlüssig durch Vorsprünge, die in Aussparungen eingreifen (nicht dargestellt).

Zur Montage des geteilten Innenrings werden die Ringsegmente 1, 2 durch Einstecken der Buchsen 5 miteinander verbunden. Dabei oder anschließend werden die Leitschaufeln 4 in den Buchsen 5 gelagert.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1, 2: Ringsegment
- 3: Trennfuge
- 4: verstellbare Leitschaufel
- 4.1: Zapfen
- 5: Buchse
- 5.1: Kragen (radialer Vorsprung)
- 5.2: Bund
- 6: Ringnut (Hinterschneidung)
- 7: Dichtungsträger (Sicherungselement)
- 7.1: Wabendichtung
- 7.2: Vorsprung
- 7.3: Hinterschneidung

## Patentansprüche

1. Geteilter Innenring für eine verstellbare Leitschaufelanordnung, mit einer Ringsegmentanordnung mit wenigstens zwei Ringsegmenten (1,2) und einer Buchsenanordnung mit wenigstens einer Buchse (5) zur Lagerung einer verstellbaren Leitschaufel (4) der Leitschaufelanordnung, **dadurch gekennzeichnet, dass** ein Ringsegment und ein weiteres Ringsegment der Ringsegmentanordnung durch die Buchsenanordnung miteinander derart verbindbar sind, dass eine Bewegung dieser Ringsegmente in zwei gegensinnige Richtungen wenigstens eines Freiheitsgrads und/oder eine Bewegung dieser Ringsegmente in axialer und/oder Umfangsrichtung voneinander fort und/oder aufeinander zu begrenzt ist.

2. Geteilter Innenring nach dem vorhergehenden Anspruch, **dadurch gekennzeichnet, dass** die quergeteilte Ringsegmentanordnung wenigstens zwei axial benachbarte Ringsegmente (I, 2) aufweist, die miteinander eine Trennfuge (3) in Umfangsrichtung definieren und durch die Buchsenanordnung verbindbar sind.

3. Geteilter Innenring nach dem vorhergehenden Anspruch, **gekennzeichnet durch** eine formschlüssige Zentrierung von wenigstens zwei axial benachbarten Ringsegmenten der quergeteilten Ringsegmentanordnung.

4. Geteilter Innenring nach einem der vorhergehenden Ansprüche, **dadurch gekennzeichnet, dass** die längsgeteilte Ringsegmentanordnung wenigstens zwei in Umfangsrichtung benachbarte Ringsegmente aufweist, die miteinander eine axiale Trennfuge definieren und durch die Buchsenanordnung verbindbar sind.

5. Geteilter Innenring nach einem der vorhergehenden Ansprüche, **dadurch gekennzeichnen,** dass zwei benachbarte Ringsegmente der Ringsegmentanordnung durch die Buchsenanordnung miteinander form-, reib- und/oder stoffschlüssig verriegelbar und/oder verspannbar sind.

6. Geteilter Innenring nach dem vorhergehenden Anspruch, **dadurch gekennzeichnet, dass** wenigstens eine Buchse der Buchsenanordnung einen radialen Vorsprung (5.1) aufweist, der eine Hinterschneidung (6) in zwei benachbarten Ringsegmenten (1, 2) der Ringsegmentanordnung hintergreift.

7. Geteilter Innenring nach dem vorhergehenden Anspruch, **dadurch gekennzeichnet, dass** die Hinterschneidung auf einer der Leitschaufelanordnung ab- oder zugewandten Seite der Ringsegmentanordnung angeordnet ist.

8. Geteilter Innenring nach einem der vorhergehenden Ansprüche, **gekennzeichnet durch** ein ein- oder mehrteiliges Sicherungselement (7) zur radialen Festlegung der Buchsenanordnung an der Ringsegmentanordnung.

9. Geteilter Innenring nach dem vorhergehenden Anspruch, **dadurch gekennzeichnet, dass** das Sicherungselement und die Ringsegmentanordnung miteinander form-, reib- und/oder stoffschlüssig verriegelbar und/oder verspannbar sind.

10. Geteilter Innenring nach einem der vorhergehenden Ansprüche, **dadurch gekennzeichnet, dass** das Sicherungselement wenigstens einen axialen Vorsprung (7.2) aufweist, der eine Hinterschneidung (7.3) in der Ringsegmentanordnung hintergreift.

11. Geteilter Innenring nach einem der vorhergehenden Ansprüche, **dadurch gekennzeichnet, dass** das Sicherungselement eine Innendichtung (7.1) aufweist.

12. Geteilter Innenring nach einem der vorhergehenden Ansprüche, **dadurch gekennzeichnet, dass** das Sicherungselement wenigstens zwei axial benachbarte Ringsegmente der quergeteilten Ringsegmentanordnung formschlüssig zentriert.

13. Geteilter Innenring nach einem der vorhergehenden Ansprüche, **gekennzeichnet durch** eine verstellbare Leitschaufelanordnung mit wenigstens einer verstellbaren Leitschaufel (4), die durch die Buchsenanordnung gelagert ist.

14. Turbomaschine, insbesondere Gasturbine, vorzugsweise Flugtriebwerk, mit wenigstens einem verstellbaren Leitgitter mit einem geteilten Innenring nach dem vorhergehenden Anspruch.

15. Verfahren zur Montage eines geteilten Innenrings nach einem der vorhergehenden Ansprüche, **dadurch gekennzeichnet, dass** wenigstens zwei Ringsegmente (1, 2) der Ringsegmentanordnung durch die Buchsenanordnung zur Lagerung der verstellbaren Leitschaufelanordnung derart miteinander verbunden werden, dass eine Bewegung dieser Ringsegmente in zwei gegensinnige Richtungen wenigstens eines Freiheitsgrads und/oder eine Bewegung dieser Ringsegmente in axialer und/oder Umfangsrichtung voneinander fort und/oder aufeinander zu begrenzt ist.

## Claims

1. A split inner ring for an adjustable guide blade arrangement, comprising a ring segment arrangement with at least two ring segments (1, 2) and a bearing bush arrangement with at least one bearing bush (5) for mounting an adjustable guide blade (4) of the guide blade arrangement, **characterized in that** one ring segment and another ring segment of the ring segment arrangement can be coupled to one another by the bearing bush arrangement in such a manner that movement of these ring segments in two opposite directions of at least one degree of freedom and/or movement of these ring segments in the axial and/or peripheral direction is limited to away from one another and/or to one another.

2. The split inner ring according to the preceding claim, **characterized in that** the crosswise-split ring segment arrangement has at least two axially adjacent ring segments (1, 2) which together define a separation joint (3) in the peripheral direction and can be joined by the bearing bush arrangement.

3. The split inner ring according to the preceding claim, **characterized by** a form-fitting centering of at least two axially adjacent ring segments of the crosswise-split ring segment arrangement.

4. The split inner ring according to any of the preceding claims, **characterized in that** the lengthwise-split ring segment arrangement has at least two ring segments adjacent in the peripheral direction, which together define an axial separation joint and can be joined by the bearing bush arrangement.

5. The split inner ring according to any of the preceding claims, **characterized in that** two adjacent ring segments of the ring segment arrangement can be locked and/or can be braced together in form-fitting manner, frictionally, and/or cohesively by the bearing bush arrangement.

6. The split inner ring according to the preceding claim, **characterized in that** at least one bearing bush of the bearing bush arrangement has a radial projection (5.1) that engages behind an undercut (6) in two adjacent ring segments (1, 2) of the ring segment arrangement.

7. The split inner ring according to the preceding claim, **characterized in that** the undercut is arranged on a side of the ring segment arrangement facing or facing away from the guide blade arrangement.

8. The split inner ring according to any of the preceding claims, **characterized by** a one-part or a multi-part securing element (7) for the radial fixation of the bearing bush arrangement at the ring segment arrangement.

9. The split inner ring according to the preceding claim, **characterized in that** the securing element and the ring segment arrangement can be locked and/or can be braced together in form-fitting manner, frictionally, and/or cohesively.

10. The split inner ring according to any of the preceding claims, **characterized in that** the securing element has at least one axial projection (7.2) that engages behind an undercut (7.3) in the ring segment arrangement.

11. The split inner ring according to any of the preceding claims, **characterized in that** the securing element has an inner seal (7,1).

12. The split inner ring according to any of the preceding claims, **characterized in that** the securing element centers at least two axially adjacent ring segments of the crosswise-split ring segment arrangement in form-fitting manner.

13. The split inner ring according to any of the preceding claims, **characterized by** an adjustable guide blade arrangement having at least one adjustable guide blade (4), which is mounted via the bearing bush arrangement.

14. A turbomachine, in particular, a gas turbine, preferably an aircraft engine, having at least one adjustable guide vane assembly having a split inner ring according to the preceding claim.

15. A method for installing the split inner ring according to any of the preceding claims, **characterized in that** at least two ring segments (1, 2) of the ring segment arrangement are coupled to one another by the bearing bush arrangement for bearing the adjustable guide blade arrangement in such a manner that movement of these ring segments in two opposite directions of at least one degree of freedom and/or movement of these ring segments in the axial and/or peripheral direction is limited to away from one another and/or to one another.

## Revendications

1. Bague interne partagée pour un agencement réglable d'aubes directrices avec un agencement de segments annulaires comprenant au moins deux segments annulaires (1, 2) et un agencement de douille comprenant au moins une douille (5) pour le montage d'une aube directrice réglable (4) de l'agencement d'aubes directrices, **caractérisée en ce qu'**un segment annulaire et un autre segment annulaire de l'agencement de segments annulaires peuvent être raccordés l'un à l'autre par l'agencement de douille en sorte qu'un déplacement d'un de ces segments dans deux sens opposés d'au moins un degré de liberté et/ou un déplacement de ces segments annulaires dans la direction axiale et/ou la direction périphérique soient délimités l'un de l'autre et/ou l'un après l'autre.

2. Bague interne partagée selon la revendication précédente, **caractérisée en ce que** l'agencement de segments annulaires transversalement partagé présente au deux segments annulaires axialement voisins (1, 2) qui définissent l'un avec l'autre un joint de séparation (3) dans la direction périphérique et peuvent être raccordés par l'agencement de douille.

3. Bague interne partagée selon la revendication précédente, **caractérisée par** un centrage à adaptation de formes d'au moins deux segments annulaires axialement voisins de l'agencement de segments annulaires transversalement partagé.

4. Bague interne partagée selon l'une quelconque des revendications précédentes, **caractérisée en ce que** l'agencement de segments annulaires longitudinalement partagé présente au moins deux segments annulaires voisins dans la direction périphérique, qui définissent l'un avec l'autre un joint de séparation axial et peuvent être raccordés par l'agencement de douille.

5. Bague interne partagée selon l'une quelconque des revendications précédentes, **caractérisée en ce que** deux segments annulaires voisins de l'agencement de segments annulaires peuvent être verrouillés et/ou assemblés l'un à l'autre par l'agencement de douille par adaptation de formes, par friction et/ou par jonction venue de matière.

6. Bague interne partagée selon la revendication précédente, **caractérisée en ce qu'**au moins une douille de l'agencement de douille présente une saillie radiale (5.1) qui s'engage derrière une contre-dépouille (6) dans deux segments annulaires voisins (1, 2) de l'agencement de segments annulaires.

7. Bague interne partagée selon la revendication précédente, **caractérisée en ce que** la contre-dépouille est agencée sur un côté de l'agencement de segments annulaires opposé à l'agencement d'aubes directrices ou tourné vers celui-ci.

8. Bague interne partagée selon l'une quelconque des revendications précédentes, **caractérisée par** un élément de fixation (7) d'une ou plusieurs parties pour la fixation radiale de l'agencement de douille sur l'agencement de segments annulaires.

9. Bague interne partagée selon la revendication précédente, **caractérisée en ce que** l'élément de fixation et l'agencement de segments annulaires sont verrouillés et/ou assemblés l'un à l'autre par adaptation de formes, par friction et/ou par jonction venue de matière.

10. Bague interne partagée selon l'une quelconque des revendications précédentes, **caractérisée en ce que** l'élément de fixation présente au moins une saillie axiale (7.2) qui s'engage derrière une contre-dépouille (7.3) dans l'agencement de segments annulaires.

11. Bague interne partagée selon l'une quelconque des revendications précédentes, **caractérisée en ce que** l'élément de fixation présente un joint étanche interne (7.1).

12. Bague interne partagée selon l'une quelconque des revendications précédentes, **caractérisée en ce que** l'élément de fixation centre au moins deux segments annulaires axialement voisins de l'agencement de segments annulaires transversalement partagé avec adaptation de formes.

13. Bague interne partagée selon l'une quelconque des revendications précédentes, **caractérisée par** un agencement réglable d'aubes directrices avec au moins une aube directrice réglable (4) qui est montée à travers l'agencement de douille.

14. Turbomachine, en particulier turbine à gaz, de préférence groupe motopropulseur, comprenant au moins une grille directrice réglable avec une bague interne partagée selon la revendication précédente,

15. Procédé de montage d'une bague interne partagée selon l'une quelconque des revendications précédentes, **caractérisé en ce qu'**au moins deux segments annulaires (1, 2) de l'agencement de segments annulaires sont raccordés l'un à l'autre par l'agencement de douille pour monter l'agencement réglable d'aubes directrices en sorte qu'un déplacement de ces segments annulaires dans deux sens opposés d'au moins un degré de liberté et/ou un déplacement de ces segments annulaires dans la direction axiale et/ou dans la direction périphérique soient délimités l'un de l'autre et/ou l'un après l'autre.
